# EUROPÄISCHE PATENTSCHRIFT

(11) **EP 2 827 604 B1**
(45) Veröffentlichungstag und Bekanntmachung des Hinweises auf die Patenterteilung: **31.01.2018**
(21) Anmeldenummer: 13178957.0
(22) Anmeldetag: 01.08.2013
(51) Int. Cl.: H04N 21/81, H04N 21/24, H04N 21/266

(54) **Verfahren, Server und Computerprogramm zum Optimieren von Onlinewerbung**
Method, server and computer program for optimising online advertising
Procédé, serveur et programme informatique pour optimiser une publicité en ligne

(30) Priorität: 16.07.2013 EP 13176739
(43) Veröffentlichungstag der Anmeldung: 21.01.2015
(73) Patentinhaber: HURRA Communications GmbH, 70599 Stuttgart (DE)
(72) Erfinder: Schweier, René, 70599 Stuttgart (DE)
(74) Vertreter: DREISS Patentanwälte PartG mbB

(56) Entgegenhaltungen:
- US-A1- 2005 187 823
- US-A1- 2007 039 018
- US-A1- 2009 172 728
- US-A1- 2010 299 199
- US-A1- 2012 117 604
- US-A1- 2012 136 724
- US-A1- 2013 152 126

## Beschreibung

Die vorliegende Erfindung betrifft ein Verfahren zum Optimieren von Onlinewerbung, die über ein Kommunikationsnetzwerk bei einem System zur Echtzeitbuchung von Onlinewerbung in dem Kommunikationsnetzwerk auf einer bestimmten Netzwerkseite, zu einem bestimmten Zeitpunkt, einem bestimmten Suchbegriff zugeordnet und/oder als ein bestimmter Typ von Onlinewerbung gebucht wird.

Außerdem betrifft die Erfindung einen mit einem Kommunikationsnetzwerk verbundenen Server zum Optimieren von Onlinewerbung. Der Server dient zum Buchen von Onlinewerbung in dem Kommunikationsnetzwerk auf einer bestimmten Netzwerkseite, zu einem bestimmten Zeitpunkt, einem bestimmten Suchbegriff zugeordnet und/oder als ein bestimmter Typ von Onlinewerbung über das Kommunikationsnetzwerk bei einem System zur Echtzeitbuchung von Onlinewerbung.

Schließlich betrifft die vorliegende Erfindung ein Computerprogramm, das zum Ablauf auf einem Mikroprozessor eines mit einem Kommunikationsnetzwerk verbundenen Servers vorgesehen ist und zum Optimieren von Onlinewerbung programmiert ist. Die Onlinewerbung wird über das Kommunikationsnetzwerk bei einem System zur Echtzeitbuchung von Onlinewerbung in dem Kommunikationsnetzwerk auf einer bestimmten Netzwerkseite, zu einem bestimmten Zeitpunkt, einem bestimmten Suchbegriff zugeordnet und/oder als ein bestimmter Typ von Onlinewerbung gebucht.

Ein Verfahren, ein Server und ein Computerprogramm der eingangs genannten Art sind bspw. aus der US 8,301,747 bekannt. Dort wird über das Kommunikationsnetzwerk einer Vielzahl von Onlinenutzern auf deren Clients eine bestimmte Onlinewerbung auf einer bestimmten Netzwerkseite präsentiert. Insbesondere wird vorgeschlagen, die Onlinewerbung in Abhängigkeit von der Reaktion der Onlinenutzer auf die Onlinewerbung zu optimieren. Eine Onlinewerbung, die zu hohen Umsätzen des beworbenen Produkts oder in dem beworbenen Onlineshop führt, wird als erfolgreich beurteilt. Eine Onlinewerbung, die zu keinen höheren Umsätzen des beworbenen Produkts oder in dem beworbenen Onlineshop führt, wird dagegen als weniger erfolgreich angesehen. Die weniger erfolgreiche Onlinewerbung kann bspw. optimiert werden, indem diese in Zukunft entweder modifiziert oder nicht mehr auf der bisherigen Netzwerkseite präsentiert wird. Ein Modifizieren der Onlinewerbung kann eine Präsentation auf einer anderen Netzwerkseite, eine Änderung des Typs von Onlinewerbung, eine Änderung des Inhalts und/oder des Erscheinungsbildes der Onlinewerbung u.a. umfassen.

Ein Verfahren zum Optimieren von Onlinewerbung, die über ein Kommunikationsnetzwerk auf einer vorgebbaren Netzwerkseite, zu einem vorgebbaren Zeitpunkt, einem vorgebbaren Suchbegriff zugeordnet und/oder als ein vorgebbarer Typ von Onlinewerbung gebucht und einem Zuschauer an einem mit dem Kommunikationsnetzwerk verbundenen Client ausgegeben wird, ist aus US 2009/0172728 A1 bekannt.

Ziel bei einer Optimierung von Onlinewerbung ist es in der Regel, ein zur Verfügung stehendes Budget für die Onlinewerbung möglichst effizient zu nutzen. Zu diesem Zweck können nicht einfach die Ausgaben für die Platzierung von Onlinewerbung auf einer Netzwerkseite pauschal reduziert werden, da dies unter Umständen zu einer schlechteren Positionierung der Onlinewerbung auf der Netzwerkseite führen könnte, wodurch der Erfolg der Onlinewerbung verringert werden könnte. Dadurch würde man sich eine Verringerung der Ausgabe für die Onlinewerbung mit einer schlechteren Effizienz der Onlinewerbung erkaufen. Andererseits können die Ausgaben für die Platzierung von Onlinewerbung auf einer Netzwerkseite nicht pauschal erhöht werden, da aufgrund des beschränkten Budgets nur noch weniger Onlinewerbung platziert werden könnte.

Als Server wird beispielsweise ein mit einem Kommunikationsnetzwerk, bspw. dem Internet, verbundener Computer bezeichnet, auf dem eine Software abläuft, so dass der Server geeignet ist, bestimmte Dienste bereitzustellen. Diese Dienste können beispielsweise das Bereitstellen von Informationen oder Ressourcen (beispielsweise Speicherplatz, Rechenkapazität oder ein Zugang zu einem Kommunikationsnetzwerk) sein.

Die Dienste werden typischerweise durch einen sogenannten Client in Anspruch genommen. Dazu wird von dem Client mittels eines Kommunikationsnetzwerks, beispielsweise dem Internet, eine Anfrage an den Server gestellt. Der Server wertet die eingehende Anfrage aus, überprüft gegebenenfalls eine Berechtigung des Clients zum Stellen der Anfrage und übermittelt der Anfrage entsprechende Informationen beziehungsweise stellt angeforderte Ressourcen zur Verfügung.

Häufig werden Informationen von einem Server in Form von sogenannten Netzwerkseiten (auch Internetseiten oder kurz Seiten genannt) einem Client zur Verfügung gestellt.

Zur Beschreibung des Inhalts einer Netzwerkseite wird eine Seitenbeschreibungssprache verwendet. Heutzutage wird dazu überwiegend die standardisierte Seitenbeschreibungssprache HTML (Hypertext Mark up Language) eingesetzt. HTML erlaubt es, auf einfache Weise den Inhalt und das Aussehen einer Netzwerkseite in einem sogenannten HTML-Dokument zu beschreiben. Fordert beispielsweise ein Client Informationen von einem Server an, so übermittelt der Server ein die angeforderten Informationen enthaltendes HTML-Dokument an den Client. Sollen die dem Client mittels des HTML-Dokuments übermittelten Informationen einem Benutzer dargestellt werden, so wird die Netzwerkseite beziehungsweise das HTML-Dokument einem speziellen Computerprogramm (sogenannter Browser) zugeführt, das in der Lage ist, HTML-Dokumente zu interpretieren und mittels einer grafischen Oberfläche auf einem Computermonitor darzustellen.

Die von dem Server an den Client übermittelten Netzwerkseiten können bereits vor der Anforderung durch den Client erzeugt und an geeigneter Stelle abgespeichert worden sein. Derartige Netzwerkseiten bezeichnet man als statische Netzwerkseiten.

Häufig wird von einem Client jedoch eine derart spezifische Anfrage an den Server gestellt, dass die angeforderten Informationen enthaltende Netzwerkseiten dynamisch von dem Server erzeugt werden. Dies ist beispielsweise der Fall, wenn ein Benutzer mittels des Clients an einen als Suchmaschine ausgebildeten Server eine Anfrage in Form eines Suchbegriffes sendet. Die Suchmaschine ermittelt nach einem vorgebbaren Algorithmus anhand des Suchbegriffes Informationen, die mit dem Suchbegriff assoziiert werden. In Abhängigkeit von den ermittelten Informationen wird automatisch eine dynamische Netzwerkseite von dem Server erzeugt und an den Client übermittelt.

Eine Vielzahl von Clients und Servern kommuniziert mittels des Internets und bilden in ihrer Gesamtheit ein multimediales Informationssystem, das sogenannte WWW (World Wide Web). Innerhalb des WWW zur Verfügung gestellte Netzwerkseiten sind mittels einer URL (Uniform Ressource Locator) adressierbar. Eine URL ist unter anderem aus dem Namen des die Netzwerkseite zur Verfügung stellenden Servers, einem Verzeichnis und einem der Netzwerkseite zugeordneten Namen zusammengesetzt. Eine URL erlaubt es, die dieser URL zugeordnete Netzwerkseite direkt von einem Client aus anzuwählen. Dazu gibt ein Benutzer beispielsweise mittels einer Tastatur die URL in einem speziellen Eingabefeld des Browsers ein. Der Client generiert daraufhin und übermittelt eine Anfrage über das Internet an den entsprechenden Server, der dann die angeforderte Netzwerkseite über das Internet an den Client übermittelt.

Innerhalb eines HTML-Dokuments ist es möglich, URLs weiterer Netzwerkseiten beziehungsweise HTML-Dokumente anzugeben. Derartige URLs werden als Verweis oder als Hyperlink (kurz: Link) bezeichnet. Auf statischen Netzwerkseiten dargestellte Verweise werden im Folgenden als statische Verweise bezeichnet. Analog werden auf dynamischen Netzwerkseiten dargestellte Verweise im Folgenden als dynamische Verweise bezeichnet.

Werden Verweise mittels eines Browsers einem Benutzer dargestellt, so hat der Benutzer die Möglichkeit, einen dargestellten Verweis anzuwählen und sich die der angewählten URL entsprechende Netzwerkseite anzeigen zu lassen. Dabei kann sich die angewählte Netzwerkseite insbesondere auch auf einem anderen Server befinden.

Häufig wird von einem ersten Server ein zweiter Server beauftragt, auf Netzwerkseiten, die von dem zweiten Server übermittelt werden, eine Onlinewerbung darzustellen. Die Onlinewerbung kann einen Verweis auf eine Netzwerkseite des ersten Servers umfassen. Ein solcher Verweis kann beispielsweise ein sogenanntes Werbe-Banner sein, das mittels einer textuellen und/oder grafischen Darstellung für ein über den ersten Server zu beziehendes Produkt oder eine über den ersten Server vermittelte Dienstleistung wirbt. Die Beauftragung des zweiten Servers durch den ersten Server kann dabei entweder unmittelbar oder mittelbar über einen Dienstleister bzw. einen weiteren, dem Dienstleister zugeordneten Server erfolgen. Der erste Server kann bspw. einem Online-Shop zugeordnet sein, der das über die Onlinewerbung beworbene Produkt oder die beworbene Dienstleistung anbietet. Der zweite Server kann bspw. einem Suchmaschinenanbieter zugeordnet sein, der auf einer Netzwerkseite eine Trefferliste mit Suchtreffern zu einer bestimmten Suchanfrage und zusätzlich ausgewählte Onlinewerbung darstellt. Der Dienstleister, dem der weitere Server zugeordnet ist, kann bspw. ein Unternehmen zur Optimierung von Onlinemarketing sein.

Einer auf der zweiten Netzwerkseite dargestellten Onlinewerbung sind typischerweise Text-, Klang- und/oder Graphikelemente zugeordnet, die einem Benutzer, der die zweite Netzwerkseite bspw. mittels einer Suchanfrage an einen Suchmaschinenbetreiber angefordert hat, mittels des Browsers dargestellt werden. Der Begriff "Onlinewerbung" umfasst somit auch die Gesamtheit der der Onlinewerbung zugeordneten Informationen.

Ein Produkt kann insbesondere auch eine von dem ersten Server angebotene Information sein. Als Produkt kann ferner ein von dem ersten Server angebotener Zugang zu einem geschützten Speicherbereich sein, in welchem weitere Informationen abgelegt sind und abgerufen werden können. Derartige Informationen können beispielsweise Nachrichten, Börsenkurse, sowie sonstige Text-, Musik- oder Bilddateien sein.

Häufig sind die von dem zweiten Server an den Client übermittelten Informationen auf mehrere Netzwerkseiten verteilt, wobei zunächst nur eine Netzwerkseite an den Client übermittelt wird. Der Client fordert dann sukzessive eine der weiteren Netzwerkseiten von dem zweiten Server an.

Ist der zweite Server eine Suchmaschine, so kann der erste Server den zweiten Server beauftragen, auf einer in Abhängigkeit eines von einem Benutzer eingegebenen Suchbegriffs erzeugten Netzwerkseite, eine Onlinewerbung darzustellen. Die Beauftragung erfolgt in der Regel online und in Echtzeit über das Kommunikationsnetzwerk. Häufig werden Positionen für Onlinewerbung auf der Netzwerkseite des zweiten Servers versteigert. Dazu gibt der erste Server ein Maximalgebot ab und bekommt dann unter Berücksichtigung der anderen Gebote eine entsprechende Position auf der Netzwerkseite zugeteilt, an der die Onlinewerbung dargestellt wird.

In der Praxis läuft dies dann bspw. so ab, dass ein Benutzer eines Clients eine Suchanfrage nach einem bestimmten Suchbegriff über das Kommunikationsnetzwerk an den zweiten Server übermittelt. Dieser erstellt einerseits die entsprechende Trefferliste als dynamische Netzwerkseite. Außer den Treffern ist auf der Netzwerkseite auch eine bestimmte Anzahl an Positionen für Onlinewerbung verfügbar. Diese Positionen werden dann im Rahmen einer Onlineauktion in Echtzeit bzw. quasi in Echtzeit versteigert. Dabei werden Gebote berücksichtigt, die für den von dem Benutzer angefragten Suchbegriff bei dem zweiten Server vorliegen. Das höchste Gebot erhält in der Regel die beste bzw. begehrteste Position auf der von dem zweiten Server zur Verfügung gestellten Netzwerkseite. Mit abnehmender Höhe der Gebote werden dann die weniger guten Positionen vergeben. Es kann sogar vorkommen, dass niedrige Gebote keine Position auf der Netzwerkseite ersteigern können. Schließlich wird die dynamisch generierte Netzwerkseite mit der Trefferliste und mit den Onlinewerbungen an den ersteigerten Positionen über das Kommunikationsnetzwerk an den Client übermittelt und dort auf dem Browser dargestellt.

Je mehr Onlinewerbung auf einer von einem zweiten Server an einen Client übermittelten Netzwerkseite dargestellt wird, desto größer ist üblicherweise die Datenmenge der zu übertagenden Netzwerkseite. Dies führt zu einer erhöhten Belastung des Kommunikationsnetzwerks. Dies wird noch verstärkt, wenn aufgrund der großen Zahl von Onlinewerbung mehrere Netzwerkseiten von dem zweiten Server an den Client übertragen werden. Ferner benötigt eine mit Onlinewerbung angereicherte Netzwerkseite mehr Speicherplatz, sowohl auf dem übermittelnden zweiten Server, als auch auf dem empfangenden Client. Schließlich benötigt der Client bzw. dessen Browser relativ lange für die Verarbeitung der empfangenen Datenmenge und für die Ausgabe der entsprechenden Netzwerkseite.

Insbesondere wenn der zweite Server als Suchmaschine ausgebildet ist, besteht die Informationen, die in Abhängigkeit eines von dem Client an den Server übermittelten Suchbegriffs von der Suchmaschine erzeugt wird, aus einer Liste von Verweisen zu Netzwerkseiten (Trefferliste), die von anderen Servern zur Verfügung gestellt werden. Um die Relevanz der von einer Suchmaschine auf eine Anfrage zur Verfügung gestellten Informationen und Verweise zu erhöhen ist es bekannt, diese Informationen und Verweise ebenso wie die Suchbegriffe mittels Methoden der Computerlinguistik zu klassifizieren und diese Klassen einander zuzuordnen. Mittels einer Zuordnung von klassifizierten Suchbegriffen und Informationen wählt die Suchmaschine anhand eines von einem Client empfangenen Suchbegriffs geeignete Informationen und Verweise aus.

Die Anzahl der Anfragen, die von einem Server pro Zeiteinheit beantwortet werden können, hängt unter anderem von der Datenmenge der Netzwerkseiten ab, die pro Anfrage von dem Server an den anfragenden Client übermittelt werden. Statische Netzwerkseiten müssen beispielsweise von dem Server aus einem Speicher ausgelesen werden. Zur Erzeugung dynamischer Netzwerkseiten muss der jeweilige Inhalt (Informationen) aus mindestens einem Speicher ausgelesen und in die Netzwerkseite integriert werden. Es ist denkbar, dass die Informationen aus mehreren über das Kommunikationsnetzwerk verteilten Speichern ausgelesen werden. Die Netzwerkseiten werden dann in Abhängigkeit der Schichten eines zur Datenübertragung verwendeten Netzwerkprotokolls (z.B. TCP/IP) bearbeitet. Das heißt, je größer die von einem Server zu übertragende Datenmenge für eine Anfrage ist, desto geringer ist für weitere, zeitnahe Anfrage zur Verfügung stehende Leistungsfähigkeit des Servers.

Die Netzwerkseiten werden von dem Server an den Client mittels des Kommunikationsnetzwerks übermittelt. Dabei ist die Datenmenge, die von dem Kommunikationsnetzwerk pro Zeiteinheit übertragen werden kann (Bandbreite), begrenzt.

Der Client bearbeitet eine empfangene Netzwerkseite zunächst in Abhängigkeit des verwendeten Netzwerkprotokolls und speichert die Netzwerkseite dann in einem geeigneten Speicherbereich ab. Der Browser bearbeitet die Netzwerkseite dann derartig, dass die Informationen auf einem Monitor dargestellt werden können.

Um die Rechenleistung und die Speicherkapazitäten des Servers und des Clients möglichst wenig zu belasten und um das Kommunikationsnetzwerk durch die Übertragung einer möglichst geringen Datenmenge zu entlasten, ist es wünschenswert, nur solche Onlinewerbung auf der von der Suchmaschine erzeugten Netzwerkseite darzustellen, die für den Client bzw. für den Benutzer auch tatsächlich von Interesse sind bzw. die zu einer Erhöhung des Umsatzes bei dem ersten Server führen.

Um durch eine Reduzierung der Datenmenge einer Netzwerkseite die Rechenleistung eines Servers und des Client, sowie die Übertragungsleistung des Kommunikationsnetzwerks möglichst wenig zu belasten und effizient auszunutzen, ist es daher Aufgabe der Erfindung, eine Möglichkeit zur Verfügung zu stellen, um weitgehend nur derartige, einem ersten Server zugeordnete Onlinewerbung auf einer Netzwerkseite eines zweiten Servers darzustellen, die für einen Client bzw. Benutzer auch von Interesse ist bzw. die zu einer Erhöhung des Umsatzes bei dem ersten Server führt. Die Onlinewerbung ist dem ersten Server zugeordnet, indem bspw. der erste Server bzw. ein Online-Shop, der den ersten Server betreibt, oder aber ein von dem ersten Server angebotenes oder vertriebenes Produkt oder eine entsprechende Dienstleistung des ersten Servers durch die Onlinewerbung beworben wird.

Die Aufgabe wird dadurch gelöst, dass
- ein mit dem Kommunikationsnetzwerk verbundener Server ein auf mindestens einem Sender laufendes Rundfunkprogramm automatisch scannt,
- der Server das Rundfunkprogramm zum Erkennen des Inhalts automatisch auswertet, und
- der Server in Abhängigkeit von dem Ergebnis der Auswertung des Rundfunkprogramms die Onlinewerbung nach einem bestimmten Algorithmus optimiert.

Das Rundfunkprogramm kann als ein Radioprogramm, als ein Podcast oder als ein beliebig anderes von einer beschränkten oder unbeschränkten Nutzeranzahl empfangbares Audio- und/oder Video-Programm ausgebildet sein. Die Nutzer können das Rundfunkprogramm dabei frei oder als Abonnenten empfangen. Eine Übertragung des Rundfunkprogramms über Kabel, über terrestrischen Funk, über Satellitenfunk, über das Internet oder auf beliebig andere Weise ist denkbar. Besonders bevorzugt ist es, wenn das Rundfunkprogramm ein Fernsehprogramm mit einer Kombination aus Audio- und Videoinhalten ist.

Wenn das Rundfunkprogramm als ein Fernsehprogramm ausgebildet ist, kann der Server zum Erkennen des Inhalts des Fernsehprogramms den Inhalt von Untertiteln für Gehörlöse, die zusammen mit dem Fernsehprogramm übertragen werden, scannen und mit Schlüsselworten vergleichen, die zusammen mit diesen zugeordneten Fernsehprogramminhalten in einer Datenbank abgespeichert sind, und im Falle einer Übereinstimmung davon ausgegangen wird, dass der Inhalt des gescannten Fernsehprogramms dem Fernsehprogramminhalt aus der Datenbank entspricht, für den Übereinstimmung der Schlüsselworte festgestellt wurde. Auf diese Weise ist es möglich, neben der über das Fernsehprogramm ausgestrahlten Werbung auch gezielt Keywords z.B. in Nachrichten oder Unterhaltungssendungen zu erkennen und die Onlinewerbung in Abhängigkeit von den Keywords zu optimieren. Dann kann gemessen werden, ob diese Keywords eine Auswirkung (insbesondere im Sinne einer Erhöhung des Umsatzes) auf über die Onlinewerbung beworbene Produkte, Dienstleistungen oder Online-Shops haben.

Gemäß einer vorteilhaften Weiterbildung der Erfindung wird vorgeschlagen, dass der Server zum Erkennen des Inhalts des Rundfunkprogramms das gescannte Rundfunkprogramm oder einen digitalen Fingerabdruck der Audio- und/oder Videoinhalte des gescannten Rundfunkprogramms mit in einer Datenbank abgespeicherten Rundfunkprogramminhalten oder deren Fingerabdruck vergleicht und im Falle einer Übereinstimmung davon ausgegangen wird, dass der Inhalt des gescannten Rundfunkprogramms dem Rundfunkprogramminhalt aus der Datenbank entspricht, mit dem Übereinstimmung festgestellt wurde. Ein solches Verfahren zum Erkennen des Inhalts eines Audio- und/oder Video-Programms ist - allerdings zu einem anderen Zweck als bei der vorliegenden Erfindung - ausführlich in der US 7,853,664 B1 beschrieben. Auf diese Druckschrift wird bezüglich der Realisierung des Schrittes zum Erkennen des Inhalts des Rundfunkprogramms ausdrücklich Bezug genommen. Zu diesem Zweck soll die genannte Druckschrift durch Bezugnahme zum Inhalt der vorliegenden Anmeldung gemacht werden.

Gemäß einer bevorzugten Ausführungsform der vorliegenden Erfindung wird vorgeschlagen, dass in der Datenbank zu den jeweiligen Programminhalten zusätzliche Informationen abgespeichert sind, die ebenfalls zur Optimierung der Onlinewerbung herangezogen werden können. Bei den zusätzlich in der Datenbank abgespeicherten Informationen kann es sich um folgendes handeln:
- Angaben zu einem beworbenen Produkt,
- Angaben zu einem Auftraggeber eines Werbeblocks,
- Angaben über eine Zielgruppe des Rundfunkprogramminhalts, und/oder
- Angaben zu einer regionalen Reichweite des Rundfunkprogramms.

Vorteilhafterweise
- wertet der Server das gescannte Rundfunkprogramm zum Erkennen von Werbeblöcken aus,
- wertet der Server die einzelnen Werbeblöcke zum Erkennen des Inhalts des Werbeblocks im Hinblick auf den Auftraggeber des Werbeblocks und/oder das mindestens eine beworbene Produkt aus, und
- optimiert der Server in Abhängigkeit von dem Ergebnis der Auswertung der einzelnen Werbeblöcke nach einem bestimmten Algorithmus die Onlinewerbung.

Gemäß dieser Ausgestaltung wird also das Rundfunkprogramm gezielt zum Erkennen von Werbeblöcken gescannt. Der Erfinder hat herausgefunden, dass die Nutzung des Internet während der Werbeblöcke ansteigt. Somit steigt grundsätzlich die Effizienz von Onlinewerbung, die während dieser Zeit auf Netzwerkseiten geschaltet wird. Ferner hat der Erfinder herausgefunden, dass die Onlinenutzer während eines Werbeblocks besonders empfänglich für Onlinewerbung für Produkte und/oder Dienstleistungen sind, die zuvor durch den Werbeblock beworben wurden. Ein Inhalt der Onlinewerbung wird deshalb so gewählt, dass er für die Onlinenutzer von besonderem Interesse ist. Die besondere Empfänglichkeit der Onlinenutzer für bestimmte Werbeinhalte hält auch noch nach dem Ende des Werbeblocks für eine bestimmte Zeit an. Deshalb kann es empfehlenswert sein, die Onlinewerbung auch noch etwa 10-30 min nach dem Ende eines Werbeblocks weiter auf den Netzwerkseiten auszugeben.

Das Optimieren der Onlinewerbung in Abhängigkeit vom Inhalt des Rundfunkprogramms kann auf unterschiedliche Art und Weise erfolgen. Insbesondere können die Art bzw. der Typ sowie der Inhalt der Onlinewerbung, eine Position der Onlinewerbung auf einer Netzwerkseite, die Netzwerkseite, auf der die Onlinewerbung ausgegeben wird, etc. variiert werden, damit die Onlinewerbung für den Onlinenutzer von höherem Interesse ist und er dann mit einer höheren Wahrscheinlichkeit das beworbene Produkt oder die Dienstleistung bei dem ersten Server kauft. Um die Position der Onlinewerbung auf einer Netzwerkseite und/oder die Netzwerkseite, auf der die Onlinewerbung ausgegeben wird, zu variieren, wird bspw. die Höhe eines Maximalgebots für ein Echtzeit Online-Auktionssystem zum Ersteigern von Positionen für die Onlinewerbung auf einer bestimmten Netzwerkseite erhöht oder verringert. Außerdem können zusätzliche Gebote für Onlinewerbung auf neuen Netzwerkseiten, evtl. sogar von einem anderen Betreiber als die bisherigen Netzwerkseiten, auf denen Onlinewerbung geschaltet wurde, an ein entsprechendes Echtzeit Online-Auktionssystem für Onlinewerbung abgegeben werden.

Besonders bevorzugt umfasst das Optimieren der Onlinewerbung eine der nachfolgenden Maßnahmen:
- Ermitteln der Höhe eines Maximalgebots für die Onlinewerbung und Weiterleiten des Maximalgebots über das Kommunikationsnetzwerk an das System zur Echtzeitbuchung von Onlinewerbung,
- Ermitteln von mindestens einer Netzwerkseite, auf der die Onlinewerbung platziert werden soll, und Weiterleiten des Maximalgebots über das Kommunikationsnetzwerk an das System zur Echtzeitbuchung von Onlinewerbung auf der ermittelten Netzwerkseite,
- Ermitteln von mindestens einem Zeitpunkt, zu dem die Onlinewerbung platziert werden soll, und Weiterleiten des Maximalgebots über das Kommunikationsnetzwerk an das System zur Echtzeitbuchung von Onlinewerbung zu dem ermittelten Zeitpunkt,
- Ermitteln mindestens einer Region, in der den Onlinenutzern die Onlinewerbung präsentiert werden soll, und Weiterleiten des Maximalgebots über das Kommunikationsnetzwerk an das System zur Echtzeitbuchung von Onlinewerbung für die ermittelte Region,
- Ermitteln mindestens eines Suchbegriffs, dem die Onlinewerbung zugeordnet sein soll, und Weiterleiten des Maximalgebots über das Kommunikationsnetzwerk an das System zur Echtzeitbuchung von dem ermitteln Suchbegriff zugeordneter Onlinewerbung,
- Ermitteln mindestens eines Profils eines Nutzers des Kommunikationsnetzwerks, dem die Onlinewerbung präsentiert werden soll, und Weiterleiten des Maximalgebots über das Kommunikationsnetzwerk an das System zur Echtzeitbuchung von dem ermitteln Nutzer-Profil zugeordneter Onlinewerbung, und
- Ermitteln mindestens eines Typs von Onlinewerbung, die angezeigt werden soll, und Weiterleiten des Maximalgebots über das Kommunikationsnetzwerk an das System zur Echtzeitbuchung von Onlinewerbung des ermittelten Typs.

Vorzugsweise bucht der Server zumindest zu den Zeiten, zu denen Werbeblöcke erkannt werden, mehr Onlinewerbung bei dem System zur Echtzeitbuchung von Onlinewerbung bucht. Ferner wird vorgeschlagen, dass der Server zumindest zu den Zeiten zwischen den Werbeblöcken weniger Onlinewerbung bei dem System zur Echtzeitbuchung von Onlinewerbung bucht. Des Weiteren wird vorgeschlagen, dass der Server zumindest zu den Zeiten, zu denen ein Werbeblock von einem Wettbewerber in dem Rundfunkprogramm läuft, mehr eigene Onlinewerbung bei dem System zur Echtzeitbuchung von Onlinewerbung bucht. Außerdem bucht der Server vorzugsweise zumindest zu den Zeiten, zu denen ein Werbeblock in dem Rundfunkprogramm läuft, mehr Onlinewerbung, die inhaltlich zu dem Werbeblock passt, bei dem System zur Echtzeitbuchung von Onlinewerbung. Schließlich wird vorgeschlagen, dass der Server zumindest zu den Zeiten, zu denen schlechte Nachrichten, Katastrophen oder ähnliches in dem Rundfunkprogramm laufen, weniger Onlinewerbung bei dem System zur Echtzeitbuchung von Onlinewerbung bucht.

Durch Ermitteln mindestens eines Profils eines Nutzers des Kommunikationsnetzwerks, dem die Onlinewerbung präsentiert werden soll, und das Weiterleiten eines entsprechenden Maximalgebots über das Kommunikationsnetzwerk an das System zur Echtzeitbuchung von dem ermitteln Nutzer-Profil zugeordneter Onlinewerbung ist es möglich, die Onlinewerbung nur solchen Online-Nutzern zu präsentieren, für die die Onlinewerbung von besonderem Interesse sein wird, weil ihr Nutzer-Profil zu dem der Rundfunkwerbung bzw. der Onlinewerbung zugeordneten Nutzer-Profil passt oder mit diesem sogar übereinstimmt. So ist es bspw. denkbar, dass wenn z.B. eine Rundfunkwerbung (bspw. ein TV-Spot) einer bestimmten Firma oder für ein bestimmtes Produkt auf dem Rundfunkprogramm ausgesandt wurde, Onlinewerbung nur auf solche Nutzerprofile geschaltet wird, die zuletzt bestimmten Suchbegriffen (bspw. bestimmten Firmen oder Produkten) oder Zielgruppen zugeordnet werden konnten.

Gemäß einer anderen vorteilhaften Weiterbildung wird vorgeschlagen, dass der Server in Abhängigkeit von einer Zielgruppe, für die das gescannte Rundfunkprogramm bestimmt ist, die Onlinewerbung optimiert, indem er mehr Onlinewerbung für Produkte, die für die Zielgruppe bestimmt oder von Interesse sind, bei dem System zur Echtzeitbuchung von Onlinewerbung bucht.

Ferner ist es denkbar, dass der Server in Abhängigkeit von einer regionalen Reichweite des gescannten Rundfunkprogramms die Onlinewerbung optimiert, indem er mehr Onlinewerbung für diejenigen Onlinenutzer, die sich innerhalb der Reichweite des Rundfunkprogramms befinden, bei dem System zur Echtzeitbuchung von Onlinewerbung bucht.

Schließlich wird vorgeschlagen, dass die Optimierung der Onlinewerbung auf eine vorgebbare Zeitdauer nach dem Aussenden des Rundfunkprogramms, bspw. auf 10 bis 30 Minuten nach dem Aussenden des Rundfunkprogramms, zeitlich begrenzt wird. Danach lässt die Wirkung des Rundfunkprogramms auf die Empfänglichkeit der Onlinenutzer für Onlinewerbung nach.

Zur Messung von Brutto Reichweiten eines Senders bei Radio-/ TV-Kampagnen ist es aus dem Stand der Technik bekannt, einen sog. GRP (Gross Rating Point)-Wert heranzuziehen. Er wird als Maß für den Werbedruck verwendet, und stellt die Brutto-Reichweite in Prozent innerhalb des Zielgruppenpotentials dar. Er ist damit ein grobes Maß zur Beurteilung einer Rundfunk-Werbekampagne (z.B. eines TV-Spots) und zur Vergleichbarkeit von verschiedenen Alternativen bei Werbekampagnen. Der GRP eignet sich besonders für die Auswertung von TV-Werbekampagnen. Der GRP wird berechnet als Netto-Reichweite in Prozent multipliziert mit den Durchschnittskontakten.

Einen entsprechenden Wert (sog. Active GRP) gibt es auch zum Messen der Brutto Reichweiten von Onlinewerbung.

Es wäre denkbar, beide Werte, d.h. den GRP- und den Active GRP-Wert, für das erfindungsgemäße Verfahren heranzuziehen. Auf diese Weise könnte bspw. der Werbedruck digital in dem Moment einer Rundfunkwerbung online optimiert werden, um eine möglichst große Bruttoreichweite für die Summe von Rundfunkwerbung und Onlinewerbung zu erreichen und somit gewissermaßen die Rundfunkwerbung online zu ergänzen. Dadurch könnten Online-Marketer einen besonders großen GRP erreichen. Dies kann nun im Rahmen der vorliegenden Erfindung durch die gezielte online-Ergänzung der Rundfunkwerbung erreicht werden.

Gleichzeitig könnte man auch mittels Active GRP die Reaktion (sog. Response) der Nutzer auf eine Rundfunkwerbung zusätzlich zu Views/ Clicks etc. messen.

Dadurch könnte neben der GRP-Bruttoreichweite erstmals in dem Moment der Rundfunkwerbung die Response auf die Rundfunkwerbung unter dem Einfluss der Onlinewerbung gemessen werden, um herauszufinden, welche Rundfunkwerbung eventuell anders gebucht werden sollte. Falls in Zukunft Rundfunkwerbung (ähnlich wie heute bereits Onlinewerbung) dynamisch über RTB (Real Time Bidding) oder in einem Auktionsverfahren gebucht werden kann, könnten in einer vorteilhaften Weiterentwicklung somit in Zukunft sogar Rundfunk-Werbekampagnen in Abhängigkeit von einer digitalen Response optimiert werden. Derzeit (solange ein RTB bzw. ein Auktionsverfahren für Rundfunkwerbung nicht existiert) könnte die digitale Response zumindest gemessen und in künftigen Buchungen von Rundfunkwerbung berücksichtigt werden.

Als Erweiterung oder Alternative zum Active GRP kann auch eine sogenannte Delta C-Methode zur Ermittlung eines in einem Online-Shop erzielten zusätzlichen Umsatzes bzw. Gewinns (des sogenannten Uplifts) als Reaktion auf Rundfunkspots bzw. Onlinewerbung angewendet werden. Bei der Delta C-Methode wird ein Referenzwert ohne Uplift mit einem Wert mit Uplift verglichen. Als Referenz können einzelne oder alle Kanäle (Vertriebswege, z.B. Websites für bestimmte Produkte und Dienstleistungen) herangezogen werden, die laut Auswertung des Umsatzes bzw. des Gewinns zum Zeitpunkt der Auslieferung des Rundfunkspots keinen Uplift zeigen. Die Auswertung kann in einem geeigneten Tool bei einem Unternehmen zur Optimierung von Onlinemarketing (z.B. Hurra) ablaufen. Dem Referenzwert können die Kanäle gegenübergestellt werden, die einen Uplift zeigen. Das Delta ist dann der Uplift, der mit hoher Wahrscheinlichkeit durch die Ausstrahlung des Rundfunkspots über den Fernseher oder das Radio erzielt wurde. Auf diese Weise wird das Grundrauschen auf der Website fast neutralisiert und es kann überprüft werden, ob die Optimierung der Onlinewerbung tatsächlich erfolgreich war oder nicht.

Der Uplift ist der gemessene Traffic auf der Webseite. Dieser kann bspw. durch Clicks oder Visits auf die Webseite und über die Webseite erzielter Umsatz ermittelt werden. Ebenfalls ist es denkbar, den Traffic aus einer einzigen Trafficquelle wie z.B. Search Engine Advertising (SEA) zu ermitteln. Die Auswertung erfolgt anhand eines Tools, mit dessen Hilfe ermittelt werden kann, ob während der Ausstrahlung eines Fernsehspots in einem bestimmten Online-Shop ein höherer Umsatz erzielt worden ist. Ein Online-Shop bzw. die entsprechende Webseite hat immer etwas Traffic, was als Grundrauschen bezeichnet wird. Es wird im Prinzip der Traffic vor der Onlinewerbung und bspw. 5 Minuten, 10 Minuten, 15 Minuten nach der Onlinewerbung gemessen. Die Differenz ist der Uplift und der Impact (die Auswirdung) aus der Werbung.

Der erfindungsgemäße Server weist zum Ausführen des erfindungsgemäßen Verfahrens vorzugsweise
- einen Anschluss zum Empfang von einem auf mindestens einem Sender laufenden Rundfunkprogramm auf,
- Mittel zum automatischen Scannen des Rundfunkprogramms auf,
- Mittel zum automatischen Auswerten des gescannten Rundfunkprogramms auf, um den Inhalt des Rundfunkprogramms zu ermitteln, und
- Mittel zum Optimieren der Onlinewerbung nach einem bestimmten Algorithmus in Abhängigkeit von dem Ergebnis der Auswertung des Rundfunkprogramms auf.

Der Server ist vorzugsweise der eingangs beschriebene erste Server, der bspw. einen Online-Shop zugeordnet ist, oder der genannte weitere Server, der einem Dienstleister, bspw. einem Unternehmen zur Optimierung von Onlinemarketing, zugeordnet ist. Über den Server erfolgt die Auswertung des Rundfunkprogramms und die Entscheidung wie die Onlinewerbung in Anbetracht des Inhalts des Rundfunkprogramms optimiert werden kann. Schließlich veranlasst der Server die Umsetzung der Optimierung, indem Maximalgebote für Onlinewerbung festgesetzt werden und an die entsprechenden Systeme zur Echtzeitbuchung von Onlinewerbung übermittelt werden.

Der Server weist vorteilhafterweise Mittel zur Ausführung des erfindungsgemäßen Verfahrens auf. Besonders bevorzugt sind die Mittel zur Ausführung des Verfahrens als ein Computerprogramm realisiert, das auf mindestens einem Mikroprozessor des Servers abläuft und dabei das Verfahren ausführt.

Schließlich betrifft die Erfindung auch ein Computerprogramm, das zum Ablauf auf einem Mikroprozessor eines mit einem Anschluss zum Empfang von einem auf mindestens einem Sender laufenden Rundfunkprogramm ausgestatteten Servers vorgesehen und zur Ausführung des erfindungsgemäßen Verfahrens programmiert ist, wenn es auf dem Mikroprozessor des Servers abläuft.

Weitere Merkmale und Vorteile der vorliegenden Erfindung werden nachfolgend unter Bezugnahme auf die Figuren näher erläutert. Es zeigen:
- Fig. 1: ein Computersystem gemäß einer bevorzugten Ausführungsform zur Ausführung eines erfindungsgemäßen Verfahrens;
- Fig. 2: ein Computersystem gemäß einer anderen bevorzugten Ausführungsform zur Ausführung eines erfindungsgemäßen Verfahrens; und
- Fig. 3: ein Ablaufdiagramm eines erfindungsgemäßen Verfahrens gemäß einer bevorzugten Ausführungsform.

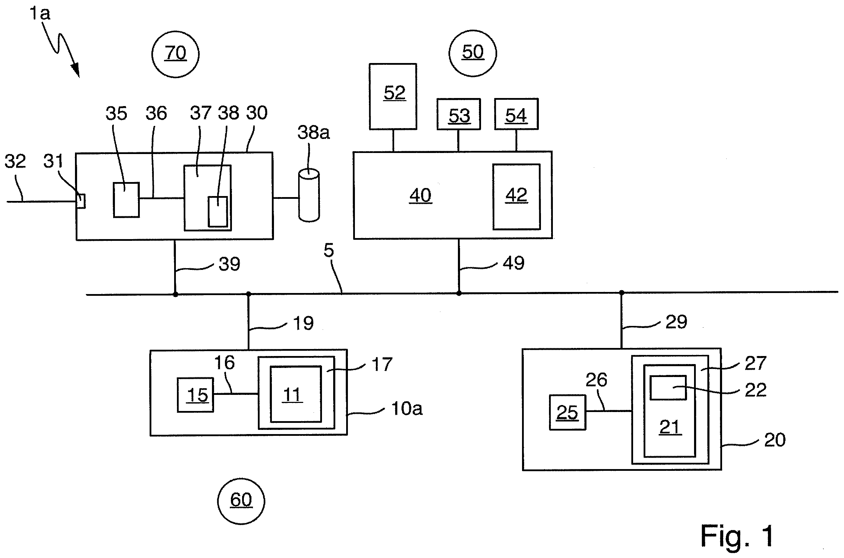

In Figur 1 ist ein Computersystem 1a dargestellt. Ein erster Server 10a weist einen Prozessor 15 und ein mit dem Prozessor 15 über ein Bussystem 16 verbundenes Speicherelement 17 auf. In dem Speicherelement 17 ist eine erste Netzwerkseite 11 abgespeichert. Über eine Datenleitung 19 ist der erste Server 10a mit einem Kommunikationsnetzwerk, beispielsweise dem Internet 5, verbunden.

Ein zweiter Server 20 weist ebenfalls einen Prozessor 25 und ein mit dem Prozessor 25 über ein Bussystem 26 verbundenes Speicherelement 27 auf. In dem Speicherelement 27 ist eine zweite Netzwerkseite 21 abgespeichert, die eine Onlinewerbung 22 aufweist. In dem dargestellten Ausführungsbeispiel umfasst die Onlinewerbung einen auch als sogenannten "Link" bezeichneten Verweis. Der Verweis als Teil der Onlinewerbung 22 verweist beispielsweise auf die erste Netzwerkseite 11. Der zweite Server 20 ist über eine Datenleitung 29 ebenfalls mit dem Internet 5 verbunden.

Ein dritter Server 30 weist einen Prozessor 35 und ein über ein Bussystem 36 mit dem Prozessor 35 verbundenes Speicherelement 37 auf. In dem Speicherelement 37 ist ein Computerprogramm 38 gespeichert. Das Computerprogramm 38 realisiert beispielsweise die Funktionalität des erfindungsgemäßen Servers indem es das erfindungsgemäße Verfahren ausführt, wenn es auf dem Prozessor 35 abläuft. Der dritte Server 30 ist über eine Datenleitung 39 ebenfalls mit dem Internet 5 verbunden. Außerdem weist der dritte Server 30 einen Anschluss 31 zum Empfang von einem auf mindestens einem Sender laufenden Rundfunkprogramm auf.

In dem dargestellten Ausführungsbeispiel empfängt der dritte Server 30 das Rundfunkprogramm über eine Leitung 32 (z.B. DVB-C). Alternativ kann der Anschluss 31 des dritten Servers 30 auch derart ausgestaltet sein, dass er das Rundfunkprogramm über eine terrestrische Funkverbindung (z.B. DVB-T) oder über eine Satellitenfunkverbindung (z.B. DVB-S) empfangen kann. Das Rundfunkprogramm kann bspw. ein Radioprogramm oder ein Fernsehprogramm sein, das über terrestrischen Funk, über Kabel oder über Satellitenfunk ausgestrahlt wird. Vorzugsweise empfängt der dritte Server 30 mehrere Rundfunkprogramme von verschiedenen Sendern gleichzeitig. In Figur 1 ist ferner ein Nutzer 70 dargestellt. Der Nutzer 70 kann beispielsweise der Betreiber des dritten Servers 30 sein.

Über eine Datenleitung 49 ist ein Client 40 mit dem Internet 5 verbunden. Der Client 40 kann beispielsweise als PC (Personal-Computer) ausgebildet sein, auf dem ein Browser abläuft. Dem Client 40 sind ferner ein Monitor 52, eine Tastatur 53, sowie eine Maus 54, zugeordnet, die es einem Benutzer 50 ermöglichen, mit dem Client 40 zu interagieren. Es ist vorstellbar, dass der Client 40 als eine sogenannte Set-Top-Box ausgebildet ist.

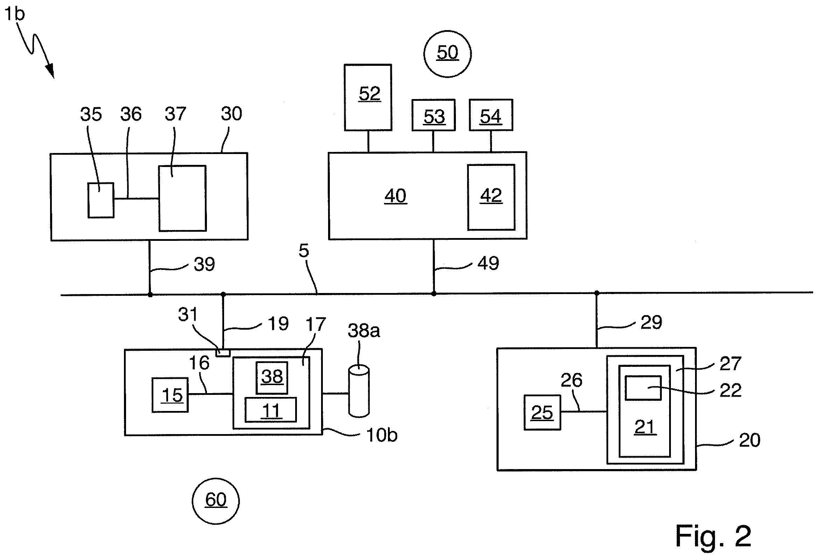

Figur 2 zeigt ein anderes Computersystem 1b, das einen ersten Server 10b, einen zweiten Server 20, einen dritten Server 30 und einen Client 40 aufweist. Die Funktionalität des erfindungsgemäßen Servers ist wieder durch das Computerprogramm 38 realisiert. Das Computerprogramm 38 ist in dem Computersystem 1b jedoch in dem Speicherelement 17 des ersten Servers 10b abgespeichert. Damit wird in Figur 2 die Funktionalität des dritten Servers 30 aus Figur 1 also innerhalb des ersten Servers 10b realisiert. In Figur 2 ist ferner ein Nutzer 60 dargestellt. Der Nutzer 60 kann beispielsweise der Betreiber des ersten Servers 10b sein.

Ferner ist in Figur 2 der Anschluss 31 zum Empfang von einem auf mindestens einem Sender laufenden Rundfunkprogramm in dem ersten Server 10b angeordnet und derart ausgebildet, dass er ein über das Internet 5 und die Datenleitung 19 übertragenes Rundfunkprogramm empfangen kann. In diesem Fall kann das Rundfunkprogramm bspw. als ein Audio-Stream, ein Video-Stream oder als ein Podcast ausgebildet sein. Selbstverständlich könnte ein Stream oder ein Podcast auch über eine geeignete Funkverbindung empfangen werden.

Der Betreiber 60 des ersten Servers 10a, 10b ist bspw. ein Online-Shop, der bestimmte Produkte und/oder Dienstleistungen auf seinen Netzwerkseiten 11 über das Internet 5 zum Kauf anbietet. Bei dem Produkt muss es sich nicht notwendigerweise um Waren handeln; es wäre auch denkbar, dass das Produkt ein kostenpflichtiger Onlinezugang zu einer Datensammlung ist oder Speicherplatz auf einem Speicher 17 oder einem externen Datenspeicher ist.

Der zweite Server 20 ist bspw. einem Suchmaschinenbetreiber zugeordnet, der auf eine Anfrage des Client 40 nach einem bestimmten Suchbegriff hin zu diesem Suchbegriff eine Trefferliste erstellt und auf seinen Netzwerkseiten 21 über das Internet 5 an den Client 40 übermittelt. Die Netzwerkseiten 21 des zweiten Servers 20 umfassen nicht nur die Treffer zu dem Suchbegriff, sondern auch mindestens eine Onlinewerbung 22 bspw. in Form eines Werbebanners, wahlweise mit einem Verweis auf die erste Netzwerkseite 11. Durch Verkauf von Positionen für Onlinewerbung 22 auf seinen Netzwerkseiten 21 verdient der Betreiber Geld. Die Onlinewerbung 22 wird entweder von dem dritten Server 30 (vgl. Figur 1) oder von dem ersten Server 10b (vgl. Figur 2) bei dem zweiten Server 20 gebucht. Selbstverständlich ist es auch denkbar, dass die Onlinewerbung 22 von einem anderen an das Internet 5 angeschlossenen Server als den Servern 10b, 30 gebucht wird.

Der Betreiber 70 des dritten Servers 30 ist bspw. ein Unternehmen zur Optimierung von Onlinemarketing. Dabei könnte in dem Beispiel aus Figur 1 der Online-Shop, dem der erste Server 10a, 10b zugeordnet ist, ein Kunde des Betreibers 70 sein. Der Betreiber 70 hat in der Regel ein bestimmtes Budget von dem Online-Shop zugeteilt bekommen, das der Betreiber 70 zum Platzieren von Onlinewerbung für den Online-Shop und/oder seine Produkte oder Dienstleistungen nutzen darf. In dem Ausführungsbeispiel aus Figur 2 verwaltet der Online-Shop sein Budget für Onlinemarketing selbst, ohne auf die Dienste eines externen Unternehmens zur Optimierung von Onlinemarketing zurückzugreifen.

Das Buchen von Onlinewerbung 22 erfolgt in der Regel online, das heißt über das Internet 5. Dabei kann es sich um einen normalen Kauf von Werbefläche auf einer Netzwerkseite eines beliebigen Betreibers handeln, indem bspw. ein definierter Preis für die Präsentation einer bestimmten Onlinewerbung 22 für eine bestimmte Zeitdauer auf einer bestimmten Netzwerkseite gezahlt wird. Alternativ ist es auch möglich, dass Werbefläche auf Netzwerkseiten im Rahmen einer Online-Auktion ersteigert wird. Dabei wird in der Regel ein Maximalgebot für die Präsentation einer bestimmten Onlinewerbung 22 für eine bestimmte Zeitdauer auf einer bestimmten Netzwerkseite abgegeben. Vorzugsweise arbeitet die Online-Auktion in Echtzeit oder quasi-Echtzeit.

Das bedeutet, dass nach einer Anfrage durch den Client 40 nach einem bestimmten Suchbegriff der zweite Server 20 nicht nur die entsprechende Trefferliste zusammenstellt, sondern gleichzeitig auch noch Werbefläche auf seiner Netzwerkseite 21 für Onlinewerbung 22 versteigert. Dabei wertet der zweite Server 20 die ihm vorliegenden Gebote von Werbeinteressenten für die zu vergebende Werbefläche aus. In der Regel erhält der Interessent, der das Höchstgebot abgegeben hat, eine besonders gute, weil dem Benutzer 50 sofort ins Auge stechende Position für seine Onlinewerbung 22. Mit abnehmender Höhe der Gebote werden dann noch weitere, weniger gute Positionen auf der Netzwerkseite 21 vergeben, falls solche vorhanden sind. Schließlich wird die Trefferliste zusammen mit den Onlinewerbungen 22, die den Zuschlag erhalten haben, als dynamische Netzwerkseite 21 über das Internet 5 an den Client 40 übertragen, der die Anfrage gestartet hatte. Dies alles erfolgt innerhalb kürzester Zeit (bspw. wenige Millisekunden) und für den Nutzer 50 unbemerkt.

Selbstverständlich kann das Versteigern der Werbefläche auf den Netzwerkseiten 21 auch außerhalb des zweiten Servers 2, bspw. auf einem weiteren an das Internet 5 angeschlossenen Server (nicht dargestellt). Nach dem Versteigern der Werbefläche übermittelt dieser weitere Server dann lediglich Informationen über die Interessenten, die den Zuschlag erhalten haben, bzw. über die entsprechende, auf der Netzwerkseite 21 darzustellende Onlinewerbung 22.

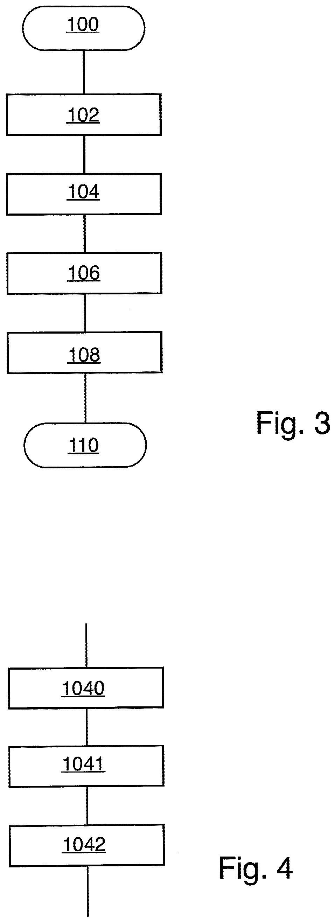

Ein Beispiel für einen Ablauf des erfindungsgemäßen Verfahrens ist in Figur 3 dargestellt. Dabei kann zweckmäßigerweise von folgendem Szenario ausgegangen werden:
Der Nutzer 60, z.B. ein Online-Shop, betreibt den ersten Server 10b, über den der Nutzer 50 Produkte oder Dienstleistungen anfordern und kaufen kann. Der zweite Server 20 stellt eine Netzwerkseite 21 zum Abruf bereit, welche die Onlinewerbung 22 mit einem Verweis auf die erste Netzwerkseite 11 enthält. Diese zweite Netzwerkseite 21 kann beispielsweise ein Einkaufsportal sein, das in Abhängigkeit einer erwünschten Dienstleistung oder einer bestimmten Branche die Onlinewerbung 22 darstellt. Selbstverständlich kann die zweite Netzwerkseite 21 ihrerseits über weitere, nicht dargestellte Verweise auf weiteren, nicht dargestellten Netzwerksseiten erreichbar sein.

Das Verfahren startet in einem Schritt 100. In einem Schritt 102 fordert der Nutzer 50 mittels des Clients 40 von dem zweiten Server 20 die zweite Netzwerkseite 21 an. Dies kann beispielsweise durch die direkte Eingabe einer der zweiten Netzwerkseite 21 zugeordneten URL geschehen oder aber durch Übermitteln einer Suchanfrage nach einem bestimmten Suchbegriff an den zweiten Server 20.

In einem Schritt 104 veranlasst der zweite Server 20, dass der Inhalt der zweiten Netzwerkseite 21 zusammengestellt wird. Insbesondere wird dabei die Werbefläche auf der Netzwerkseite 21 versteigert oder in sonstiger Weise verkauft und die auf der Netzwerkseite 21 darzustellende Onlinewerbung 22 ermittelt. Im Rahmen dessen erfolgt auch die Optimierung der Onlinewerbung 22 indem bspw. ein Maximalgebot für die Versteigerung oder ein Kaufpreis festgesetzt wird. Dann werden die eigentlichen Informationen (bspw. eine Trefferliste) zusammen mit der darzustellenden Onlinewerbung 22 zu der Netzwerkseite 21 dynamisch zusammengestellt. Dieser Schritt wird nachfolgend noch näher erläutert.

In einem Schritt 106 wird die dynamische Netzwerkseite 21 dann über das Internet 5 an den Client 40 übermittelt. In einem Schritt 108 wird die zweite Netzwerkseite 21 von dem Browser 42 interpretiert und dem Nutzer 50 mittels des Monitors 52 angezeigt. Auf der zweiten Netzwerkseite 21 ist neben der eigentlichen Information (z.B. einer Trefferliste) die Onlinewerbung 22 dargestellt. Der Onlinewerbung 22 können weitere textuelle oder graphische Informationen zugeordnet sein, die beispielsweise ein Produkt beschreiben und/oder dieses graphisch darstellen. In einem Schritt 110 ist das Verfahren dann beendet.

Nachfolgend wird der Schritt 104 anhand der Figur 4 näher erläutert. Der Schritt wird in dem Beispiel aus Figur 1 durch den dritten Server 30 und in dem Beispiel aus Figur 2 durch den ersten Server 10b ausgeführt, indem das Computerprogramm 38 auf dem Prozessor 35 bzw. 15 abgearbeitet wird. In einem Teilschritt 1040 wird das auf mindestens einem Sender laufende Rundfunkprogramm gescannt. In einem Teilschritt 1041 wird das Rundfunkprogramm dann zum Erkennen des Inhalts des Rundfunkprogramms automatisch ausgewertet. Dazu ist es denkbar, dass der Server 30 bzw. 10b das gescannte Rundfunkprogramm oder einen digitalen Fingerabdruck der Audio- und/oder Videoinhalte des gescannten Rundfunkprogramms mit in einer Datenbank 38a abgespeicherten Rundfunkprogramminhalten oder deren Fingerabdruck vergleicht. Im Falle einer Übereinstimmung wird davon ausgegangen, dass der Inhalt des gescannten Rundfunkprogramms dem Rundfunkprogramminhalt aus der Datenbank 38a entspricht, mit dem Übereinstimmung festgestellt wurde. In den Figuren 1 und 2 ist die Datenbank 38a als externe Datenbank des Servers 30; 10b dargestellt. Selbstverständlich kann es sich auch um eine interne Datenbank handeln. Insbesondere wird das Rundfunkprogramm zum Erkennen von Werbeblöcken in dem Rundfunkprogramm ausgewertet.

Anschließend wird in einem Teilschritt 1042 in Abhängigkeit von dem Ergebnis der Auswertung des Rundfunkprogramms die Onlinewerbung 22 nach einem bestimmten Algorithmus optimiert. Dazu können auch Verfahren aus der künstlichen Intelligenz eingesetzt werden. Im Zusammenhang mit der Optimierung der Onlinewerbung 22 ist es denkbar, dass in der Datenbank 38a zu den jeweiligen Programminhalten zusätzliche Informationen abgespeichert sind, die ebenfalls zur Optimierung der Onlinewerbung genutzt werden können. Insbesondere ist vorgeschlagen, dass in der Datenbank 38a Angaben zu einem in einem Werbeblock beworbenen Produkt, Angaben zu einem Auftraggeber eines Werbeblocks, Angaben über eine Zielgruppe des Rundfunkprogramminhalts, und/oder Angaben zu einer regionalen Reichweite des Rundfunkprogramms abgespeichert und den jeweiligen Programminhalten zugeordnet sind.

Die Optimierung der Onlinewerbung 22 kann eine Vielzahl von Möglichkeiten umfassen. Insbesondere ist daran gedacht, dass der Server 30; 10b
- zumindest zu den Zeiten, zu denen Werbeblöcke erkannt werden, mehr Onlinewerbung 22 bei einem System zur Echtzeitbuchung von Onlinewerbung 22 bucht,
- zumindest zu den Zeiten zwischen den Werbeblöcken weniger Onlinewerbung 22 bei dem System zur Echtzeitbuchung von Onlinewerbung 22 bucht,
- zumindest zu den Zeiten, zu denen ein Werbeblock von einem Wettbewerber in dem Rundfunkprogramm läuft, mehr eigene Onlinewerbung 22 für den ersten Server 10a, 10b und/oder die von diesem angebotenen Produkte bei dem System zur Echtzeitbuchung von Onlinewerbung 22 bucht,
- zumindest zu den Zeiten, zu denen ein Werbeblock in dem Rundfunkprogramm läuft, mehr Onlinewerbung 22, die inhaltlich zu dem Werbeblock passt, bei dem System zur Echtzeitbuchung von Onlinewerbung 22 bucht,
- zumindest zu den Zeiten, zu denen schlechte Nachrichten, Katastrophen oder ähnliches in dem Rundfunkprogramm laufen, weniger Onlinewerbung 22 bei dem System zur Echtzeitbuchung von Onlinewerbung 22 bucht,
- in Abhängigkeit von einer Zielgruppe, für die das gescannte Rundfunkprogramm bestimmt ist, die Onlinewerbung 22 optimiert, indem er mehr Onlinewerbung 22 für Produkte, die für die Zielgruppe bestimmt sind, bei dem System zur Echtzeitbuchung von Onlinewerbung 22 bucht, und/oder
- in Abhängigkeit von einer regionalen Reichweite des gescannten Rundfunkprogramms die Onlinewerbung 22 optimiert, indem er mehr Onlinewerbung 22 für diejenigen Onlinenutzer 50, die sich innerhalb der Reichweite des Rundfunkprogramms befinden, bei dem System zur Echtzeitbuchung von Onlinewerbung 22 bucht.

Diese Auflistung ist jedoch nicht abschließend und kann durch beliebig andere, bspw. heuristisch ermittelte Regeln und Optimierungsalgorithmen erweitert werden. Die Optimierung der Onlinewerbung 22 kann auf eine vorgebbare Zeitdauer nach dem Aussenden des Rundfunkprogramms zeitlich begrenzt werden. Insbesondere sind die oben genannten Maßnahmen zur Optimierung oder andere Optimierungsmaßnahmen auf etwa 10 bis 20 Minuten nach dem Aussenden eines entsprechenden Werbeblocks beschränkt. Selbstverständlich ist es denkbar, dass sich Optimierungsmaßnahmen für verschiedene, nacheinander ausgesendete Werbeblöcke überschneiden.

Im Sinne der Erfindung wird von Onlinewerbung 22 gesprochen, die inhaltlich zu einem Werbeblock passt, wenn die Onlinewerbung 22 für ein Produkt ist, das der gleichen oder einer ähnlichen Produktgruppe angehört, wie das in dem Werbeblock beworbene Produkt. Beispiele für Produktgruppen sind Elektroartikel, Fotoartikel, Küchenartikel, Freizeitartikel, etc. Die Produktgruppen können noch beliebig fein weiter untergegliedert werden, um eine inhaltlich möglichst gut passende Onlinewerbung 22 identifizieren zu können. So kann bspw. eine Produktgruppe Elektroartikel noch unterteilt werden in Untergruppen Computer, Computerzubehör, Küchengeräte, Haushaltsgeräte. Die Untergruppe Computer könnte wiederum unterteilt werden in Server, Desktopcomputer, Laptopcomputer, Tablet-PCs, Handhelds. Alternativ kann eine passende Onlinewerbung 22 auch ein Produkt betreffen, das das in dem Werbeblock beworbene Produkt sinnvoll ergänzt (z.B. Onlinewerbung 22 für Golfurlaub passend zu Werbeblock für Golfausrüstung).

Mehr Onlinewerbung 22 bei dem System zur Echtzeitbuchung von Onlinewerbung 22 zu buchen bedeutet, den gebotenen Preis oder ein Maximalgebot für die Onlinewerbung 22 zu erhöhen, um mit höherer Wahrscheinlichkeit bei einem Verkauf oder einer Versteigerung einer Online-Werbefläche auf der Netzwerkseite 21 den Zuschlag zu erhalten. Es kann aber auch bedeuten, Preisgebote zum Kauf von Online-Werbefläche bzw. Maximalgebote zum Ersteigern von Werbefläche auf zusätzlichen Netzwerkseiten bzw. anderen Suchworten zugeordnet abzugeben oder an zusätzliche Systeme zur Echtzeitbuchung von Onlinewerbung 22 zu senden. Auf diese Weise kann die Quantität der Onlinewerbung 22 vorübergehend gezielt zu erhöhen. Erfindungsgemäß wird nicht einfach planlos Onlinewerbung 22 geschaltet, sondern der Inhalt und die Platzierung der Onlinewerbung 22 wird so optimiert, dass sie für den Nutzer 50 wahrscheinlich von hohem Interesse ist und der Nutzer 50 folglich auch das beworbene Produkt bei dem Online-Shop kauft oder anderweitig (bspw. durch einen Vertragsabschluss) für Umsatz sorgt (hohe Conversion Rate).

Das Optimieren der Onlinewerbung umfasst vorzugsweise eine der nachfolgenden Maßnahmen:
- Ermitteln der Höhe eines Maximalgebots für die Onlinewerbung 22 und Weiterleiten des Maximalgebots über das Kommunikationsnetzwerk 5 an das System zur Echtzeitbuchung von Onlinewerbung,
- Ermitteln von mindestens einer Netzwerkseite 21, auf der die Onlinewerbung 22 platziert werden soll, und Weiterleiten des Maximalgebots über das Kommunikationsnetzwerk 5 an das System zur Echtzeitbuchung von Onlinewerbung 22 auf der ermittelten Netzwerkseite 21,
- Ermitteln von mindestens einem Zeitpunkt, zu dem die Onlinewerbung 22 platziert werden soll, und Weiterleiten des Maximalgebots über das Kommunikationsnetzwerk 5 an das System zur Echtzeitbuchung von Onlinewerbung 22 zu dem ermittelten Zeitpunkt,
- Ermitteln mindestens einer Region, in der den Onlinenutzern 50 die Onlinewerbung 22 präsentiert werden soll, und Weiterleiten des Maximalgebots über das Kommunikationsnetzwerk 5 an das System zur Echtzeitbuchung von Onlinewerbung 22 für die ermittelte Region,
- Ermitteln mindestens eines Suchbegriffs (sog. Keyword), dem die Onlinewerbung 22 zugeordnet sein soll, und Weiterleiten des Maximalgebots über das Kommunikationsnetzwerk 5 an das System zur Echtzeitbuchung von dem ermitteln Suchbegriff zugeordneter Onlinewerbung 22, und
- Ermitteln mindestens eines Typs von Onlinewerbung 22, die angezeigt werden soll, und Weiterleiten des Maximalgebots über das Kommunikationsnetzwerk 5 an das System zur Echtzeitbuchung von Onlinewerbung 22 des ermittelten Typs.

Die Onlinewerbung 22 kann bspw. die folgenden verschiedenen Typen von Werbung umfassen:
- Email-Werbung,
- Banner-Werbung,
- eingebundene Werbebanner, wie bspw. Skyscraper, Content-Ad, Rectangle,
- Pixel-Banner,
- Pop-Up- oder Pop-Under-Werbung,
- Verbal Placement,
- Targeting,
- Suchmaschinen-Optimierung,
- Interstitials,
- Prestitials,
- In-Text-Werbung,
- Site-Branding,
- Web-Sponsoring, und
- kommerzielle Videoclips.

Insbesondere wird vorgeschlagen, dass der Server 30, 10b in dem Teilschritt 1041 die einzelnen Werbeblöcke zum Erkennen des Inhalts des Werbeblocks im Hinblick auf den Auftraggeber des Werbeblocks (z.B. Werbung von Armani® oder H&M®) und/oder das mindestens eine beworbene Produkt (z.B. Werbung für Kleidung oder Schuhe) auswertet. In dem Teilschritt 1042 optimiert der Server 30, 10b dann die Onlinewerbung 22 nach einem der oben beispielhaft genannten oder nach einem beliebig anderen Algorithmus in Abhängigkeit von dem Ergebnis der Auswertung im Schritt 1401.

Im Anschluss an den Teilschritt 1042 wird die Onlinewerbung 22 dann wie oben bereits beschrieben im Schritt 106 in optimierter Form über das Kommunikationsnetz 5 an den Client 40 übermittelt, um im Schritt 108 an den Nutzer 50 ausgegeben zu werden.

Somit laufen zwei verschiedene Verfahren parallel zueinander ab. Das eine Verfahren betrifft den ständigen Aufruf von Netzwerkseiten 21 durch eine Vielzahl von Nutzern 50 über deren Clients 40 und die Ausgabe der aufgerufenen Netzwerkseiten 21 (mit der Onlinewerbung 22) an die Nutzer 50. Gleichzeitig läuft im Hintergrund für die Nutzer 50 unbemerkt das erfindungsgemäße Optimierungsverfahren ab, wonach die auf den aufgerufenen Netzwerkseiten 21 dargestellte Onlinewerbung 22 in Abhängigkeit vom Inhalt eines beobachteten Rundfunkprogramms optimiert wird.

Selbstverständlich ist es denkbar, dass die Optimierung der Onlinewerbung 22 außer in Abhängigkeit vom Inhalt des beobachteten Rundfunkprogramms auch in Abhängigkeit weiterer Informationen bspw. über die Nutzer 50, deren Surfverhalten im Internet 5, über Tageszeit, über die Jahreszeit, über das beworbene Produkt (z.B. dessen Verfügbarkeit oder dessen Produktgruppe), etc. erfolgen. Zu diesem Zweck können entsprechende Informationen von weiteren Servern des Internets 5, bspw. von einem sog. Advertisement-Server (Ad-Server), über das Internet 5 heruntergeladen und in dem Server 30, 10b bei der Optimierung der Onlinewerbung 22 mit verarbeitet werden.

Informationen bezüglich der Produkte und Produktgruppen können auch von einem Warenwirtschaftssystem zur Verfügung gestellt werden. Warenwirtschaftssysteme können beispielsweise von einem weiteren Server des Internets 5 zur Verfügung gestellte Informationssysteme sein, die neben einer Vielzahl von Informationen bezüglich der Produkte und Produktgruppen, weitere Informationen erzeugen, verwalten und zur Verfügung stellen, wie beispielsweise Statistiken und Prognosen bezüglich dieser Informationen. Warenwirtschaftssysteme können beispielsweise eine Verfügbarkeit des Produkts oder eine Anzahl von Stornierungen von Bestellungen des Produkts zur Verfügung stellen. Ein Warenwirtschaftssystem kann auch Bestandteil des ersten Servers 10a, 10b oder des dritten Servers 30 sein. Zusätzliche Informationen bezüglich des Nutzers 50 können bspw. in einem sog. Cookie auf dem Client 40 abgespeichert werden. Dem Nutzer 50 können Cookies von dem ersten 10a, 10b, dem zweiten 20 und/oder dem dritten Server 30 gesetzt werden. In einem Cookie kann statt der gesamten zusätzlichen Information auch lediglich ein Verweis auf einen weiteren Server des Internets 5 enthalten sein, wo dann die zusätzlichen Informationen abgespeichert sind.

Ist eine Suchmaschine (z.B. zweiter Server 20) geeignet, zu einem bestimmten Produkt einen oder mehrere Anbieter zu finden, so sind jedem Anbieter eine Menge von Suchbegriffen und jedem Suchbegriff wiederum ein oder mehrere Produkte bzw. Produktgruppen zugeordnet. Es ist vorteilhaft, nur solche Onlinewerbung 22 anzuzeigen, die für einen Nutzer 50 auch wirklich von Interesse ist. Damit ist es insbesondere möglich, die Datenmenge der erzeugten und über das Kommunikationsnetzwerk 5 an den Client 40 zu übermittelnden Netzwerkseite 21 möglichst gering zu halten, um so die zur Verfügung stehende Bandbreite und die Rechenleistung der Prozessoren 35, 15 der Server 30, 10b möglichst effizient auszunutzen.

Bei den in den Figuren 3 und 4 dargestellten Ablaufdiagrammen von Ausführungsbeispielen des erfindungsgemäßen Verfahrens ist es möglich, einzelne Schritte zu verändern, wegzulassen oder neue Schritte hinzuzufügen. Beispielsweise können dem Nutzer 50 mehrere Cookies von dem ersten 10a, 10b, dem zweiten 20 und/oder dem dritten Server 30 gesetzt werden. Damit könnte ein Verhalten des Nutzers 50 noch genauer analysiert werden und eine noch präzisere Optimierung der auf der zweiten Netzwerkseite 21 dargestellten Onlinewerbung 22 erfolgen.

## Patentansprüche

1. Verfahren zum Optimieren von Onlinewerbung (22), die über ein Kommunikationsnetzwerk (5) bei einem System zur Echtzeitbuchung von Onlinewerbung in dem Kommunikationsnetzwerk (5) auf einer vorgebbaren Netzwerkseite (21), zu einem vorgebbaren Zeitpunkt, einem vorgebbaren Suchbegriff zugeordnet und/oder als ein vorgebbarer Typ von Onlinewerbung (22) gebucht und Onlinenutzern (50) an mit dem Kommunikationsnetzwerk (5) verbundenen Clients (40) ausgegeben wird, **dadurch gekennzeichnet, dass**
- ein mit dem Kommunikationsnetzwerk (5) verbundener Server (30; 10b) auf mehreren Sendern laufende Rundfunkprogramme automatisch scannt und der Server (30; 10b) die gescannten Rundfunkprogramme zum Erkennen des Inhalts der Rundfunkprogramme in Form eines Werbeblocks auswertet,
- in einer Datenbank (38a), auf die der Server (30; 10b) Zugriff hat, Fingerabdrücke von Programminhalten der Rundfunkprogramme in Form von Werbeblöcken und den Werbeblöcken zugeordnete zusätzliche Informationen abgespeichert sind, welche zu jedem Werbeblock
+ Angaben zu dem beworbenen Produkt,
+ Angaben zu dem Auftraggeber eines Werbeblocks, und/oder
+ Angaben über die Zielgruppe, an die der Rundfunkprogramminhalt gerichtet ist, umfassen,
- der Server (30; 10b) zum Erkennen des Inhalts des Rundfunkprogramms einen digitalen Fingerabdruck der Audioinhalte der gescannten Rundfunkprogramme mit den in der Datenbank (38a) abgespeicherten Fingerabdrücken der Audioinhalte der Werbeblöcke vergleicht und im Falle einer Übereinstimmung für eines der gescannten Rundfunkprogramme davon ausgegangen wird, dass der Inhalt des Rundfunkprogramms dem ermittelten Werbeblock aus der Datenbank (38a) entspricht, mit dem Übereinstimmung festgestellt wurde,
- der Server (30; 10b) zu dem ermittelten Werbeblock Angaben zu dem in dem Werbeblock beworbenen Produkt und/oder Angaben zu dem Auftraggeber des Werbeblocks und Angaben über die Zielgruppe, an die der Rundfunkprogramminhalt gerichtet ist, aus der Datenbank (38a) ausliest,
- der Server (30; 10b) in Abhängigkeit von dem Ergebnis der Auswertung des Rundfunkprogramms, anhand des erkannten Werbeblocks, und anhand der aus der Datenbank (38a) ausgelesenen Angaben zu dem in dem Werbeblock beworbenen Produkt und/oder der Angaben zu dem Auftraggeber des Werbeblocks und der Angaben über die Zielgruppe den Inhalt und die Platzierung der Onlinewerbung (22) optimiert, indem eine optimale Netzwerkseite (21), ein optimaler Zeitpunkt, ein optimaler Suchbegriff, dem die Onlinewerbung (22) zugeordnet ist, und/oder ein optimaler Typ von Onlinewerbung (22) zur Ausgabe der Onlinewerbung (22) über den Client (40) ermittelt wird, und indem Onlinewerbung (22) nur an solche Onlinenutzer (50) ausgegeben wird, deren Nutzerprofile zuletzt bestimmten Zielgruppen zugeordnet werden konnten, so dass die Onlinewerbung (22) bei diesen Onlinenutzern (50) für eine höhere Conversion Rate sorgt als ohne Optimierung der Onlinewerbung (22).

2. Verfahren nach Anspruch 1, **dadurch gekennzeichnet, dass** die Rundfunkprogramme Fernsehprogramme sind.

3. Verfahren nach einem der vorhergehenden Ansprüche, **dadurch gekennzeichnet, dass** das Optimieren der Onlinewerbung (22) eine der nachfolgenden Maßnahmen umfasst:
- Ermitteln der Höhe eines Maximalgebots für die Onlinewerbung (22) und Weiterleiten des Maximalgebots über das Kommunikationsnetzwerk (5) an das System zur Echtzeitbuchung von Onlinewerbung,
- Ermitteln von mindestens einer Netzwerkseite (21), auf der die Onlinewerbung (22) platziert werden soll, und Weiterleiten des Maximalgebots über das Kommunikationsnetzwerk (5) an das System zur Echtzeitbuchung von Onlinewerbung (22) auf der ermittelten Netzwerkseite (21),
- Ermitteln von mindestens einem Zeitpunkt, zu dem die Onlinewerbung (22) platziert werden soll, und Weiterleiten des Maximalgebots über das Kommunikationsnetzwerk (5) an das System zur Echtzeitbuchung von Onlinewerbung zu dem ermittelten Zeitpunkt,
- Ermitteln mindestens einer Region, in der den Onlinenutzern die Onlinewerbung (22) präsentiert werden soll, und Weiterleiten des Maximalgebots über das Kommunikationsnetzwerk (5) an das System zur Echtzeitbuchung von Onlinewerbung (22) für die ermittelte Region,
- Ermitteln mindestens eines Suchbegriffs, dem die Onlinewerbung (22) zugeordnet sein soll, und Weiterleiten des Maximalgebots über das Kommunikationsnetzwerk (5) an das System zur Echtzeitbuchung von dem ermitteln Suchbegriff zugeordneter Onlinewerbung (22),
- Ermitteln mindestens eines Profils eines Onlinenutzers (50) des Kommunikationsnetzwerks (5), dem die Onlinewerbung (22) präsentiert werden soll, und Weiterleiten des Maximalgebots über das Kommunikationsnetzwerk (5) an das System zur Echtzeitbuchung von dem ermitteln Nutzer-Profil zugeordneter Onlinewerbung (22), und
- Ermitteln mindestens eines Typs von Onlinewerbung (22), die angezeigt werden soll, und Weiterleiten des Maximalgebots über das Kommunikationsnetzwerk (5) an das System zur Echtzeitbuchung von Onlinewerbung (22) des ermittelten Typs.

4. Verfahren nach einem der vorhergehenden Ansprüche, **dadurch gekennzeichnet, dass** der Server (30; 10b) zumindest zu den Zeiten, zu denen Werbeblöcke erkannt werden, mehr Onlinewerbung (22) bei dem System zur Echtzeitbuchung von Onlinewerbung (22) bucht.

5. Verfahren nach einem der vorhergehenden Ansprüche, **dadurch gekennzeichnet, dass** der Server (30; 10b) zumindest zu den Zeiten zwischen den Werbeblöcken weniger Onlinewerbung (22) bei dem System zur Echtzeitbuchung von Onlinewerbung (22) bucht.

6. Verfahren nach einem der vorhergehenden Ansprüche, **dadurch gekennzeichnet, dass** der Server (30; 10b) zumindest zu den Zeiten, zu denen ein Werbeblock von einem Wettbewerber in einem der Rundfunkprogramme läuft, mehr eigene Onlinewerbung (22) bei dem System zur Echtzeitbuchung von Onlinewerbung (22) bucht.

7. Verfahren nach einem der vorhergehenden Ansprüche, **dadurch gekennzeichnet, dass** der Server (30; 10b) zumindest zu den Zeiten, zu denen ein Werbeblock in einem der Rundfunkprogramme läuft, mehr Onlinewerbung (22), die inhaltlich zu dem Werbeblock passt, bei dem System zur Echtzeitbuchung von Onlinewerbung (22) bucht.

8. Verfahren nach einem der vorhergehenden Ansprüche, **dadurch gekennzeichnet, dass** der Server (30; 10b) in Abhängigkeit von einer Zielgruppe, für die das gescannte Rundfunkprogramm bestimmt ist, die Onlinewerbung (22) optimiert, indem er mehr Onlinewerbung (22) für Produkte, die für die Zielgruppe bestimmt sind, bei dem System zur Echtzeitbuchung von Onlinewerbung (22) bucht.

9. Verfahren nach einem der vorhergehenden Ansprüche, **dadurch gekennzeichnet, dass** der Server (30; 10b) in Abhängigkeit von einer regionalen Reichweite des gescannten Rundfunkprogramms, auf dem der ermittelte Werbeblock gesendet wurde, die Onlinewerbung (22) optimiert, indem er mehr Onlinewerbung (22) für diejenigen Onlinenutzer (50), die sich innerhalb der Reichweite des Rundfunkprogramms befinden, bei dem System zur Echtzeitbuchung von Onlinewerbung (22) bucht.

10. Verfahren nach einem der vorhergehenden Ansprüche, **dadurch gekennzeichnet, dass** die Optimierung der Onlinewerbung (22) auf eine vorgebbare Zeitdauer nach dem Aussenden des Rundfunkprogramms zeitlich begrenzt wird.

11. Verfahren nach einem der vorhergehenden Ansprüche, **dadurch gekennzeichnet, dass** das Kommunikationsnetzwerk (5) das Internet oder ein anderes lokales Netzwerk ist.

12. Mit einem Kommunikationsnetzwerk (5) verbundener Server (30; 10b) zum Optimieren von Onlinewerbung (22), wobei der Server (30; 10b) Onlinewerbung (22) in dem Kommunikationsnetzwerk (5) auf einer vorgebbaren Netzwerkseite (21), zu einem vorgebbaren Zeitpunkt, einem vorgebbaren Suchbegriff zugeordnet und/oder als ein vorgebbarer Typ von Onlinewerbung (22) über das Kommunikationsnetzwerk (5) bei einem System zur Echtzeitbuchung von Onlinewerbung (22) bucht Onlinenutzern (50) an mit dem Kommunikationsnetzwerk (5) verbundenen Clients (40) ausgibt, **dadurch gekennzeichnet, dass** der Server (30; 10b)
- einen Anschluss (31) zum Empfang von auf mehreren Sendern laufenden Rundfunkprogrammen, und
- Mittel (38) zur Ausführung eines Verfahrens nach einem der Ansprüche 1 bis 11 aufweist.

13. Server (30; 10b) nach Anspruch 12, **dadurch gekennzeichnet, dass** die Mittel zur Ausführung des Verfahrens als ein Computerprogramm (38) realisiert sind, das auf einem Mikroprozessor (35; 15) des Servers (30; 10b) abläuft und dabei das Verfahren ausführt.

14. Computerprogramm (38), das zum Ablauf auf einem Mikroprozessor (35; 15) eines mit einem Kommunikationsnetzwerk (5) verbundenen Servers (30; 10b) vorgesehen ist und zum Optimieren von Onlinewerbung (22) programmiert ist, die über das Kommunikationsnetzwerk (5) bei einem System zur Echtzeitbuchung von Onlinewerbung (22) in dem Kommunikationsnetzwerk (5) auf einer vorgebbaren Netzwerkseite (21), zu einem vorgebbaren Zeitpunkt, einem vorgebbaren Suchbegriff zugeordnet und/oder als ein vorgebbarer Typ von Onlinewerbung (22) gebucht wird, **dadurch gekennzeichnet, dass** das Computerprogramm (38) zum Ablauf auf einem Mikroprozessor (35; 15) eines mit einem Anschluss (31) zum Empfang von auf mehreren Sendern laufenden Rundfunkprogrammen ausgestatteten Servers (30; 10b) vorgesehen und zur Ausführung eines Verfahrens nach einem der Ansprüche 1 bis 11 programmiert ist, wenn es auf dem Mikroprozessor (35; 15) des Servers (30; 10b) abläuft.

## Claims

1. A method for optimizing online advertisement (22) that is booked via a communication network (5) in a system for realtime booking of online advertisement in the communication network (5) on a particular network page (21), at a particular time, in association with a particular search term and/or as a particular type of online advertisement (22) and is presented to online users (50) on clients (40) connected to the communication network (5), **characterized in that**
- a server (30; 10b) that is connected to the communication network (5) automatically scans a broadcast radio program running on at least one station and evaluates the broadcast radio program for the purpose of recognizing the content of the broadcast radio program in terms of advertising blocks,
- wherein fingerprints of said broadcast radio program contents in terms of advertising blocks and additional information related to the advertising blocks are stored in a database (38a) to which the server (30; 10b) has access to, wherein the additional information comprises
+ details to the advertised product,
+ details relating to the purchaser of an advertising block, and/or
+ details about the target group for the broadcast radio program content,
- wherein the server (30; 10b) compares a digital fingerprint of the audio contents of the scanned broadcast radio program with fingerprints of the audio contents of the advertising blocks stored in the database (38a) for recognizing the content of the broadcast readio program and wherein in the event of a match it is assumed that the content of the scanned broadcast radio program corresponds to the broadcast radio program content from the database (38a) with which a match has been established, and
- wherein the server (30; 10b) optimizes the content and the placement of the online advertisement (22) on the basis of the result of the evaluation of the broadcast radio program, based on the recognized advertising block, and based on details relating to the advertised product and/or details relating to the purchaser of an advertising block and details about a target group , by ascertaining an optimal network page (21), an optimal time, an optimal search term with which the online advertisement (22) is intended to be associated, and/or an optimal type of online advertisement (22) for presenting the online advertisement (22) on clients (40), and by presenting the online advertisement only to online users (50) whose user profiles have recently been able to be associated with particular target groups, such that the online advertisement (22) ensures a higher conversion rate among these online user (50) compared to online advertisement without optimization.

2. The method according to claim 1, **characterized in that** the broadcast radio program is a television program.

3. The method according to one of the preceding claims, **characterized in that** optimizing online advertisement (22) comprises one of the following measures:
- ascertainment of the level of a maximum bid for the online advertisement (22) and forwarding of the maximum bid via the communication network (5) to the system for realtime booking of online advertisement,
- ascertainment of at least one network page (21) on which the online advertisement (22) is intended to be placed, and forwarding of the maximum bid via the communication network (5) to the system for realtime booking of online advertisement (22) on the ascertained network page (21),
- ascertainment of at least one time at which the online advertisement (22) is intended to be placed, and forwarding of the maximum bid via the communication network (5) to the system for realtime booking of online advertisement at the ascertained time,
- ascertainment of at least one region in which the online advertisement (22) is intended to be presented to the online users, and forwarding of the maximum bid via the communication network (5) to the system for realtime booking of online advertisement (22) for the ascertained region,
- ascertainment of at least one search term with which the online advertisement (22) is intended to be associated, and forwarding of the maximum bid via the communication network (5) to the system for realtime booking of online advertisement (22) associated with the ascertained search term,
- ascertainment of at least one profile of a user (50) of the communication network (5) to whom the online advertisement (22) is intended to be presented, and forwarding of the maximum bid via the communication network (5) to the system for realtime booking of online advertisement (22) associated with the ascertained user profile, and
- ascertainment of at least one type of online advertisement (22) that is intended to be displayed, and forwarding of the maximum bid via the communication network (5) to the system for realtime booking of online advertisement (22) of the ascertained type.

4. The method according to one of the preceding claims, **characterized in that** the server (30; 10b) books more online advertisement (22) in the system for realtime booking of online advertisement (22) at least at the times at which advertising blocks are recognized.

5. The method according to one of the preceding claims, **characterized in that** the server (30; 10b) books less online advertisement (22) in the system for realtime booking of online advertisement (22) at least at the times between the advertising blocks.

6. The method according to one of the preceding claims, **characterized in that** the server (30; 10b) books more of its own online advertisement (22) in the system for realtime booking of online advertisement (22) at least at the times at which an advertising block from a competitor is running in the broadcast radio program.

7. The method according to one of the preceding claims, **characterized in that** the server (30; 10b) books more online advertisement (22) that fits the advertising block in terms of content in the system for realtime booking of online advertisement (22) at least at the times at which an advertising block is running in the broadcast radio program.

8. The method according to one of the preceding claims, **characterized in that** the server (30; 10b) optimizes the online advertisement (22) on the basis of a target group for which the scanned broadcast radio program is intended by virtue of its booking more online advertisement (22) for products that are intended for the target group in the system for realtime booking of online advertisement (22) .

9. The method according to one of the preceding claims, **characterized in that** the server (30; 10b) optimizes the online advertisement (22) on the basis of a regional reach of the scanned broadcast radio program by virtue of its booking more online advertisement (22) for those online users (50) that are within the reach of the broadcast radio program in the system for realtime booking of online advertisement (22).

10. The method according to one of the preceding claims, **characterized in that** the optimization of the online advertisement (22) has its timing limited to a prescribable period after the transmission of the broadcast radio program.

11. The method according to one of the preceding claims, wherein the communication network (5) is the Internet or another local area network.

12. A server (30; 10b) that is connected to a communication network (5) for the purpose of optimizing online advertisement (22), wherein the server (30; 10b) books online advertisement (22) in the communication network (5) on a particular network page (21), at a particular time, in association with a particular search term and/or as a particular type of online advertisement (22) via the communication network (5) in a system for realtime booking of online advertisement (22), and presents said online advertisement (22) to online users (50) on clients (40) connected to the communication network (5), **characterized in that** the server (30; 10b)
- has a connection (31) for receiving a broadcast radio program running on at least one station, and
- means (38) for executing the method according to one of the claims 1 to 11.

13. Server (30; 10b) according to claim 12, **characterized in that** the means (38) for executing the method are a computer program (38) that runs on a microprocessor (35; 15) of the server (30; 10b) and executes the method.

14. A computer program (38) that is provided to run on a microprocessor of a server (30; 10b) connected to a communication network (5) and is programmed for optimizing online advertisement (22) that is booked via the communication network (5) in a system for realtime booking of online advertisement (22) in the communication network (5) on a particular network page (21), at a particular type, in association with a particular search term and/or as a particular type of online advertisement (22), **characterized in that** the computer program (38) is provided to run on a microprocessor (35; 15) of a server (30; 10b) equipped with a connection (31) for receiving a broadcast radio program running on at least one station and is programmed to execute the inventive method as claimed in one of claims 1 to 17 when it runs on the microprocessor (35; 15) of the server (30; 10b).

## Revendications

1. Procédé d'optimisation de publicité en ligne (22) qui est réservée via un réseau de communication (5) dans un système de réservation en temps réel de publicité en ligne dans ledit réseau de communication (5), sur une page de réseau (21) prédéterminable, à un moment prédéterminable, associée à un terme de recherche prédéterminable, et/ou comme un type prédéterminable de publicité en ligne (22), et est émise à des utilisateurs en ligne (50) sur des ordinateurs-clients (40) connectés au réseau de communication (5), **caractérisé par** le fait que/qu'
- un serveur (30; 10b) connecté au réseau de communication (5) balaie automatiquement des programmes de radiodiffusion diffusés sur plusieurs stations de radiodiffusion et que le serveur (30; 10b) évalue les programmes de radiodiffusion balayés pour identifier le contenu des programmes de radiodiffusion sous forme d'un bloc de publicité,
- dans une base de données (38a) à laquelle peut accéder le serveur (30; 10b) sont stockées des empreintes digitales de contenus de programme des programmes de radiodiffusion sous forme de blocs de publicité et des informations supplémentaires associées aux blocs de publicité, qui comprennent, pour chaque bloc de publicité,
+ des informations relatives au produit pour lequel la publicité est faite,
+ des informations relatives au donneur d'ordre d'un bloc de publicité et/ou
+ des informations relatives au groupe cible auquel s'adresse le contenu de programme de radiodiffusion,
- le serveur (30; 10b), pour identifier le contenu du programme de radiodiffusion, compare une empreinte digitale des contenus audio des programmes de radiodiffusion balayés aux empreintes digitales des contenus audio des blocs de publicité qui sont stockées dans la base de données (38a), et que, en cas de concordance pour l'un des programmes de radiodiffusion balayés, il est supposé que le contenu du programme de radiodiffusion correspond au bloc de publicité identifié de la base de données (38a) avec lequel la concordance a été constatée,
- le serveur (30; 10b) lit dans la base de données (38a), quant au bloc de publicité identifié, des informations relatives au produit pour lequel la publicité est faite dans le bloc de publicité et/ou des informations relatives au donneur d'ordre du bloc de publicité et des informations relatives au groupe cible auquel s'adresse le contenu de programme de radiodiffusion,
- en fonction du résultat de l'évaluation du programme de radiodiffusion, en s'appuyant sur le bloc de publicité identifié, et en s'appuyant sur les informations relatives au produit pour lequel la publicité est faite dans le bloc de publicité et/ou les informations relatives au donneur d'ordre du bloc de publicité et les informations relatives au groupe cible qui sont lues dans la base de données (38a), le serveur (30; 10b) optimise le contenu et le placement de la publicité en ligne (22) en déterminant une page de réseau (21) optimale, un temps optimal, un terme de recherche optimal auquel la publicité en ligne (22) est associée et/ou un type optimal de publicité en ligne (22) pour l'émission de la publicité en ligne (22) via l'ordinateur-client (40), et en émettant de la publicité en ligne (22) uniquement à de tels utilisateurs en ligne (50) dont les profils d'utilisateur ont pu être associés la dernière fois à des groupes cibles déterminés, de sorte que, dans le cas de ces utilisateurs en ligne (50), la publicité en ligne (22) conduit à un taux de conversion supérieur à celui que l'on aurait sans optimisation de la publicité en ligne (22).

2. Procédé selon la revendication 1, **caractérisé par le fait que** les programmes de radiodiffusion sont des programmes de télévision.

3. Procédé selon l'une quelconque des revendications précédentes, **caractérisé par le fait que** l'optimisation de la publicité en ligne (22) comprend l'une des mesures suivantes consistant à:
- déterminer le montant d'un offre maximal pour la publicité en ligne (22) et à transmettre l'offre maximal via le réseau de communication (5) au système de réservation en temps réel de publicité en ligne,
- déterminer au moins une page de réseau (21) sur laquelle la publicité en ligne (22) doit être placée, et à transmettre l'offre maximal via le réseau de communication (5) au système de réservation en temps réel de publicité en ligne (22) sur la page de réseau (21) déterminée,
- déterminer au moins un moment où la publicité en ligne (22) doit être placée, et à transmettre au moment déterminé l'offre maximal via le réseau de communication (5) au système de réservation en temps réel de publicité en ligne,
- déterminer au moins une région dans laquelle la publicité en ligne (22) doit être présentée aux utilisateurs en ligne, et à transmettre l'offre maximal via le réseau de communication (5) au système de réservation en temps réel de publicité en ligne (22) pour la région déterminée,
- déterminer au moins un terme de recherche auquel la publicité en ligne (22) doit être associée, et à transmettre l'offre maximal via le réseau de communication (5) au système de réservation en temps réel de publicité en ligne (22) associée au terme de recherche déterminé,
- déterminer au moins un profil d'un utilisateur en ligne (50) du réseau de communication (5), auquel la publicité en ligne (22) doit être présentée, et à transmettre l'offre maximal via le réseau de communication (5) au système de réservation en temps réel de publicité en ligne (22) associée au profil d'utilisateur déterminé, et
- déterminer au moins un type de publicité en ligne (22) qui doit être affichée, et à transmettre l'offre maximal via le réseau de communication (5) au système de réservation en temps réel de publicité en ligne (22) du type déterminé.

4. Procédé selon l'une quelconque des revendications précédentes, **caractérisé par le fait que**, au moins durant les temps où des blocs de publicité sont identifiés, le serveur (30; 10b) réserve plus de publicité en ligne (22) dans le système de réservation en temps réel de publicité en ligne (22).

5. Procédé selon l'une quelconque des revendications précédentes, **caractérisé par le fait que**, au moins durant les temps entre les blocs de publicité, le serveur (30; 10b) réserve moins de publicité en ligne (22) dans le système de réservation en temps réel de publicité en ligne (22).

6. Procédé selon l'une quelconque des revendications précédentes, **caractérisé par le fait que**, au moins durant les temps où un bloc de publicité d'un concurrent est présenté dans l'un des programmes de radiodiffusion, le serveur (30; 10b) réserve plus de propre publicité en ligne (22) dans le système de réservation en temps réel de publicité en ligne (22).

7. Procédé selon l'une quelconque des revendications précédentes, **caractérisé par le fait que**, au moins durant les temps où un bloc de publicité est présenté dans l'un des programmes de radiodiffusion, le serveur (30; 10b) réserve dans le système de réservation en temps réel de publicité en ligne (22) plus de publicité en ligne (22) qui convient audit bloc de publicité quant au contenu.

8. Procédé selon l'une quelconque des revendications précédentes, **caractérisé par le fait que** le serveur (30; 10b) optimise la publicité en ligne (22) en fonction d'un groupe cible auquel le programme de radiodiffusion balayé est destiné, en réservant, dans le système de réservation en temps réel de publicité en ligne (22), plus de publicité en ligne (22) pour des produits qui sont destinés audit groupe cible.

9. Procédé selon l'une quelconque des revendications précédentes, **caractérisé par le fait que** le serveur (30; 10b) optimise la publicité en ligne (22) en fonction d'une portée régionale du programme de radiodiffusion balayé sur lequel le bloc de publicité déterminé a été diffusé, en réservant, dans le système de réservation en temps réel de publicité en ligne (22), plus de publicité en ligne (22) pour les utilisateurs en ligne (50) qui se trouvent dans la portée du programme de radiodiffusion.

10. Procédé selon l'une quelconque des revendications précédentes, **caractérisé par le fait que** l'optimisation de la publicité en ligne (22) est limitée dans le temps à une durée prédéterminable après la diffusion du programme de radiodiffusion.

11. Procédé selon l'une quelconque des revendications précédentes, **caractérisé par le fait que** le réseau de communication (5) est l'Internet ou un autre réseau local.

12. Serveur (30; 10b) connecté à un réseau de communication (5) et destiné à optimiser de la publicité en ligne (22), dans lequel le serveur (30; 10b) réserve de la publicité en ligne (22) dans le réseau de communication (5) sur une page de réseau (21) prédéterminable, à un temps prédéterminable, associée à un terme de recherche prédéterminable, et/ou comme un type prédéterminable de publicité en ligne (22) via le réseau de communication (5) dans un système de réservation en temps réel de publicité en ligne (22), et émet celle-ci à des utilisateurs en ligne (50) sur des ordinateurs-clients (40) connectés au réseau de communication (5), **caractérisé par le fait que** ledit serveur (30; 10b) présente
- un port (31) pour recevoir des programmes de radiodiffusion diffusés sur plusieurs stations de radiodiffusion, et
- des moyens (38) de mise en oeuvre d'un procédé selon l'une quelconque des revendications 1 à 11.

13. Serveur (30; 10b) selon la revendication 12, **caractérisé par le fait que** les moyens de mise en oeuvre du procédé sont réalisés en tant que programme d'ordinateur (38) qui se déroule sur un microprocesseur (35; 15) du serveur (30; 10b) tout en mettant en oeuvre le procédé.

14. Programme d'ordinateur (38) qui est prévu pour se dérouler sur un microprocesseur (35; 15) d'un serveur (30; 10b) connecté à un réseau de communication (5) et est programmé pour optimiser de la publicité en ligne (22) qui est réservée via ledit réseau de communication (5) dans un système de réservation en temps réel de publicité en ligne (22) dans ledit réseau de communication (5), sur une page de réseau (21) prédéterminable, à un moment prédéterminable, associée à un terme de recherche prédéterminable, et/ou comme un type prédéterminable de publicité en ligne (22), **caractérisé par le fait que** ledit programme d'ordinateur (38) est prévu pour se dérouler sur un microprocesseur (35; 15) d'un serveur (30; 10b) équipé d'un port (31) pour recevoir des programmes de radiodiffusion diffusés sur plusieurs stations de radiodiffusion et est programmé pour mettre en oeuvre un procédé selon l'une quelconque des revendications 1 à 11 lorsqu'il se déroule sur le microprocesseur (35; 15) du serveur (30; 10b).
